# EUROPEAN PATENT SPECIFICATION

(11) **EP 3 230 584 B1**
(45) Date of publication and mention of the grant of the patent: **25.05.2022**
(21) Application number: 15866964.8
(22) Date of filing: 27.10.2015
(51) Int. Cl.: F03D 1/04, F03D 13/25

(54) **FLOATING WIND TURBINE STRUCTURE WITH REDUCED TOWER HEIGHT AND METHOD FOR OPTIMISING THE WEIGHT THEREOF**
SCHWIMMENDE WINDTURBINENSTRUKTUR MIT REDUZIERTER TURMHÖHE UND VERFAHREN ZUR OPTIMIERUNG DES GEWICHTS DAFÜR
STRUCTURE D'ÉOLIENNE FLOTTANTE DOTÉE D'UNE HAUTEUR DE PYLÔNE RÉDUITE ET PROCÉDÉ D'OPTIMISATION DE SON POIDS

(30) Priority: 12.12.2014 DK 201470776
(43) Date of publication of application: 18.10.2017
(73) Proprietor: Envision Energy (Denmark) ApS, 8600 Silkeborg (DK)
(72) Inventor: REBSDORF, Anders Varming, DK-8660 Skanderborg (DK); FRIEDRICH, Michael, DK-8600 Silkeborg (DK)
(74) Representative: Patrade A/S
(86) International application number: PCT/DK2015/050326
(87) International publication number: WO 2016/091263

(56) References cited:
- WO-A1-2014/023313
- GB-A- 2 378 679
- US-A1- 2010 119 370
- US-A1- 2010 119 370
- US-A1- 2011 074 155
- US-A1- 2011 140 426
- US-A1- 2011 204 636
- US-A1- 2011 211 951
- Jonas Skaare Amundsen: "Consequences of introducing a cut-out wave height on a floating wind turbine concept", , 14 May 2013 (2013-05-14), pages 433-449, XP055486346, DOI: 10.1016/j.rser.2016.01.109 Retrieved from the Internet: URL:https://brage.bibsys.no/xmlui/bitstrea m/handle/11250/188991/Master%20Amundsen.pd f?sequence=1 [retrieved on 2018-06-20]

## Description

### Field of the Invention

The present invention relates to a method for optimising the weight of a wind turbine structure which comprises a wind turbine provided on an offshore foundation.

The present invention also relates to a wind turbine structure comprising a wind turbine configured to be installed on an offshore foundation in an offshore location.

### Background of the Invention

It is known that the floating foundations for wind turbines are large and heavy structures designed to provide sufficient stability and buoyancy to the wind turbine during operation and in extreme conditions. It is further known that the wind turbine tower acts as a large moment arm during tilting movement of the wind turbine, thus the floating foundation also has to counteract the bending moment introduced into the floating foundation during tilt. Traditionally, this is solved by increasing the size and weight of the floating foundation which increases the production costs and optionally also the installation costs.

Furthermore, additional structural strength is needed at the top of the wind turbine tower for compensating this bending moment and the structural loads introduced into the wind turbine tower via the wind loads as well as the wave and current loads. This is traditionally solved by adding extra material to the top end of the wind turbine tower, thus increasing the weight of the wind turbine tower, and hereby increasing the production costs.

The wind turbine should have a tower height that is between two to three times the length of the wind turbine blades, this provides an optimal balance between the costs of the wind turbine tower and the increased power output capacity at higher attitudes.

US 2014/0219797 A1, a patent application from the present applicant, discloses a partial-pitch wind turbine placed on a floating foundation which in turn is moored to the seabed. The wind turbine comprises two wind turbine blades each having an inner blade section connected to a pitchable outer blade section which is pitched to substantially maintain a constant resultant thrust value acting on the rotor hub. The size and weight of the floating foundation may thus be reduced due to this pitching scheme.

EP 2080899 A1 discloses a two-bladed wind turbine placed on a floating spar buoy shaped foundation which is anchored to the seabed via anchoring cables connected at the bottom end. In this configuration, the drive train is arranged in the floating foundation, and a flexible and bendable tower part and rotor shaft part are located between the rotor and the drive train. Stresses and loads of the wind turbine are concentrated at these flexible parts, thus they are likely to fail. Furthermore, the wind turbine tower will still be subject to large bending moment due to the large tilting range of the rotor and the wind turbine tower relative to the floating foundation.

US 8192160 B2 also discloses a wind turbine placed on a floating spar buoy shaped foundation which is anchored to the seabed via anchoring cables connected to the side of the floating foundation. The height of the nacelle relative to nominal sea level can be adjusted in normal operation by pumping water in or out of a ballast tank arranged inside the floating foundation and adjusting the length of the anchoring cables at the same time. The amount of ballast is regulated based on the wind speed. The adjusting mechanism and sealing means thereof add to the complexity and the production costs of the floating foundation. The tensioning of the anchoring cables introduces accelerated wear between the individual anchor links, thus reducing the operation time of the anchoring system.

US 2010/0119370 A1 discloses a wind turbine wherein the control system of the wind turbine controls the pitch mechanism and is connected to a wave height sensor. The control system is configured to determine the wave height based on the measured data from this wave height sensor. The control system sends a control signal to the pitch mechanism which then pitches wind turbine blades out of the wind and thus causing the rotor to stall when high waves are detected. The wind turbine blades are afterwards parked in a position where one of the three wind turbine blades extends downwards along the wind turbine tower. This document is silent about the type of foundation used or the clearance between the lowermost tip end position and a reference level, such as the sea level.

US 2011/0140426 A1 discloses a wind turbine provided on a floating foundation comprising a buoyancy chamber connected to a pump system. The buoyancy of the wind turbine is adjusted to alter the operating height of the wind turbine depending on the detected wave height or wind speed. If the wave height or wind speed exceeds a threshold, then the pump system and the buoyancy chamber is filled with water in order to reduce the operating height. When the wave height or wind speed drops below the threshold, the pump system is activated again and the buoyancy chamber is emptied in order to increase the operating height. The length of the anchoring cables is further adjusted by means of a winch as the wind turbine is raised or lower. This solution requires the use of a pump system and winch system which in turn increases the costs and complexity of the wind turbine system.

In the 2013 M.Sc. thesis "Consequences of Introducing a Cut-Out Wave Height on a Floating Wind Turbine Concept" by Jonas Skaare Amundsen (published as "XP055486346, DOI: 10.1016/j.rser.2016.01.109), Amundsen investigates the consequences of implementing a survival mode system on the floating wind turbine concept Tension-Leg-Buy which shuts down the wind turbine at the cut-out wave height H. The purpose of the thesis is to investigate and discuss the trade-off between loss in energy production in a survival mode vs gain entering from shutting down the wind turbine. Consequences of the wave height are illuminated, but the work is silent about how the wind turbine structure can be reduced to compensate for the energy loss.

### Object of the Invention

An object of this invention is to provide a solution that solves the above-mentioned problem of the prior art.

An object of this invention is to provide a method for optimising the weight of the wind turbine tower and of the offshore foundation.

An object of this invention is to provide an alternative method for operating a wind turbine that allows the height of the wind turbine to be reduced.

An object of this invention is to provide an alternative wind turbine structure that allows the weight of the wind turbine tower and of the offshore foundation to be optimised while reducing the bending moments.

### Description of the Invention

An object of the invention is achieved by a method for optimising the weight of a wind turbine structure, the wind turbine structure comprises a wind turbine provided on an offshore foundation, the wind turbine comprises a rotor with at least two wind turbine blades and a rotor hub, the wind turbine further comprises wind turbine tower, where the method comprises the steps of:
- providing the wind turbine with a distance between a sea level and a lowermost position of a tip end of the wind turbine blades which is equal to or less than 20 metres,
- measuring at least a wave height,
- operating the wind turbine according to the measured wave height,
- positioning the rotor in a parked position with a maximum clearance between the wind turbine blades and the sea level if at least the measured wave height exceeds a predetermined threshold.

This provides a simple and easy method for optimising the weight of the wind turbine as well as the weight of the offshore foundation by reducing the clearance between the lowermost position of the tip end of the wind turbine blades and a mean sea level or nominal sea level. The sea level may alternatively be defined as the mean sea level at high tide or the mean sea level at low tide. In example, the sea level may be defined as the sea level at highest astronomical tide (HAT) or the sea level at mean high water springs (MHWS). No need for ballast systems to raise and lower the wind turbine relative to the sea level as function of the wind speed or in event of an extreme wind condition. This method is well-suited for wind turbines having two or three wind turbine blades.

This configuration provides an alternative method for operating a wind turbine that allows the tower height to be reduced which in turn also reduces the moment arm of the wind turbine structure. This allows the bending moment introduced into the wind turbine to be significantly reduced, thus saving material and costs of the wind turbine tower. This configuration also allows the size and weight of the offshore foundation to be reduced, as the forces and bending moment introduced into the offshore foundation via the wind turbine are reduced, thereby further reducing the costs of the offshore foundation.

The rotor, e.g. the wind turbine blades, is parked in one or more predetermined positions depending on the measured values from various sensors or measuring units and/or reasons for operating the wind turbine, such as high waves, extreme wind conditions, service works, an emergency situation, or in a safety situation as described later. The rotor may be parked in a position so that at least one of the wind turbine blades extends in a parallel or perpendicular direction relative to the wind turbine tower. Preferably, the rotor is parked in a position that provides the maximum distance between the wind turbine blades and the sea level.

According to one embodiment, the predetermined threshold is 18 metres or less, preferably between 5 metres and 15 metres.

The wind turbine, e.g. the control unit thereof, monitors the measured wave height and activates the parking procedure if the measured wave height exceeds at least one predetermined threshold value. The threshold value may be 18 metres or less, preferably between 5 metres and 15 metres, e.g. 10 metres or 12 metres. The wave height may be measured as the distance from the wave crest to the wave through, or as the amplitude from the mean sea level to the wave crest. The amplitude is then used to calculate the wave height. Alternatively, the wave height may be determined as the significant wave height (SWH) over a predetermined time period.

According to one embodiment, the method further comprises determining a ratio between a blade length of one of the at least two wind turbine blades and a tower height of the wind turbine tower, wherein the ratio of the wind turbine is greater than 0.5.

This configuration enables the ratio between the longitudinal length, e.g. the blade length, of each wind turbine blade and the longitudinal length, e.g. the tower height, of the wind turbine tower to be increased compared to conventional wind turbines. In a conventional wind turbine, the wind turbine is designed so that it has a tower height that is at least two times the blade length. This means for a conventional wind turbine that the ratio between the blade length and the tower height is less than 0.5 whereas the present configuration enables the wind turbine to have a reduced tower height while maintaining the length of the wind turbine blades. This reduces the tilting velocity and acceleration of the nacelle as the moment arm is reduced. This also saves material and weight of the top end of the wind turbine tower as less material is needed to achieve the required stiffness, thus saving costs.

The tower height may be selected so that the wind turbine structure has a clearance between a lowermost position of the tip end of the wind turbine blades during rotation and the sea level which is equal to or less than 20 metres, preferably between 10 metres and 18 metres, e.g. 12 metres or 15 metres.

According to one embodiment, the wind turbine is operated in a normal operation mode if the measured wave height is equal to or below the threshold.

The wind turbine and thus the rotor are operated in a normal operation mode when low waves are detected, e.g. the measured wave height does not exceed the threshold. The wind turbine is operated in the normal operation mode when the measured wind speed is equal to or greater than a rated or nominal wind speed and less than a cut-out wind speed. In this normal operation mode, the wind turbine blades are pitched according to a predetermined power output profile, e.g. to maintain a nominal power output. Optionally, the speed of the rotor may also be regulated according to the predetermined power output profile. The control unit, e.g. the wind turbine control unit, controls the operation of the wind turbine and thus the rotor based on the measured wind speed and the measured wave height, thus enabling the wind turbine to continue to produce power as long as the waves remain within an acceptable range.

In a further embodiment, the wind turbine is operated in a normal start-up mode if the measured wave height is equal to or below the threshold. The wind turbine is operated in the normal start-up mode when the measured wind speed is below the rated or nominal wind speed and optionally equal to or greater than a predetermined cut-in wind speed. In this operation mode, the wind turbine blades are pitched to a pitch angle of zero according to the predetermined power profile, e.g. to produce a maximum power output. This allows the wind turbine to continue to produce power as mentioned above.

According to one embodiment, the wind turbine is operated in a shutdown mode if the measured wave height is above the threshold.

If high waves are detected, e.g. the measured wave height exceeds the threshold, then the wind turbine and thus the rotor are switched out of the normal operation or start-up mode and into a shutdown mode. In the shutdown mode, the control unit shuts down the wind turbine, e.g. the drive train thereof, so that it does produce a power out. Optionally, the power convertor unit is switched off the external grid network. The wind turbine blades are pitched to a feathered position or a position in which the loads on the wind turbine blades are reduced to a minimum. The wind turbine may also be switched into the shutdown mode by the control unit for other reasons, such as extreme wind conditions, service works, a safety situation as described later, or if a failure or emergency situation is detected.

In the shutdown mode, the rotor is rotated into a parked position and optionally locked in this position, e.g. by means of a rotor locking system. A braking system, e.g. a hydraulic or mechanical brake mechanism, may be used to brake/stop the rotation of the rotor. Alternatively or additionally, the pitching of the wind turbine blades and/or the generator operated in an inversed mode may be used to brake the rotor and rotate it into the parked position. The rotor and thus the wind turbine blades may be parked in one or more predetermined positions depending on the measured wind speed and/or wave height or other reasons, such as service works.

If the wind turbine is a two-bladed wind turbine, then the wind turbine blades may be parked in a horizontal position or in a vertical position. In the vertical position, the wind turbine blades extend in a parallel direction relative to the wind turbine tower where one of the wind turbine blades extends downwards along the wind turbine tower. In the horizontal position, the wind turbine blades extend in a perpendicular direction relative to the wind turbine tower. This reduces the risk of waves hitting the wind turbine blades in an extreme condition, e.g. large waves exceeding the threshold or wind speed exceeding the cut-out wind speed. If the wind turbine is a three-bladed wind turbine, then one of the wind turbine blades may be parked in a vertical position parallel to the wind turbine tower. In the vertical position, the one wind turbine blade extends either downwards along the wind turbine tower or upwards away from the wind turbine tower. If the one wind turbine is facing upward and away from the wind turbine tower, then the risk of waves hitting the wind turbine blades during extreme conditions is reduced.

According to a specific embodiment, the method further comprises monitoring a predetermined area relative to the offshore foundation, wherein the wind turbine is further operated in the shutdown mode if at least one moving object is detected with this area.

In the event of a safety situation, the wind turbine is operated in the shutdown mode where the rotor is parked in a predetermined position, e.g. the horizontal or vertical position as mentioned above. A monitoring system connected to the control unit detects any vessels, persons in need of rescue or even helicopters within a predetermined distance from the wind turbine structure. If an object is detected within this distance, then the control unit shut downs the wind turbine as mentioned above. The monitoring system defines a safety zone around the wind turbine, thus reducing the risk of the wind turbine blades hitting a vessel, a person in distress or a helicopter located within the safety zone.

The monitoring system may optionally determine the direction and speed of the vessel, the person in distress or the helicopter, thus allowing the wind turbine only be shut down if it is determined that the object is approaching the wind turbine. The wind turbine may alternatively be shut down if the control unit or monitoring system receives a command signal transmitted from a remote station or a remote unit located on the vessel or helicopter. Optionally, the control unit may selectively park the wind turbine blades in the vertical or horizontal position dependent on the location of said object relative to the orientation, e.g. the yaw angle, of the rotor of the wind turbine and/or dependent on the type of object detected. Furthermore, the measured wave height and/or wind speed may also be used to determine the parked position of the wind turbine blades.

According to one embodiment, the step of positioning further comprises yawing the nacelle into a parked position in which the rotor is arranged on an opposite side of an outer ladder which provides access to the wind turbine.

The nacelle is in the shutdown mode yawed to a predetermined position and optionally locked in this position, e.g. by means of a yaw locking system. The nacelle may be actively yawed using a yaw system arranged in the wind turbine or passively yawed using the wind acting on the rotor. The nacelle and thus the rotor may be positioned on the opposite side of an outer ladder or another boat landing structure providing access to the wind turbine structure. The yawing may be done before, during or after the wind turbine blades are rotated into the parked position. This allows any service vessels to move into position relative to an outer platform of the wind turbine even if blades are parked in a vertical position.

An object of the invention is also achieved by a wind turbine structure comprising:
- an offshore foundation configured to be installed at an installation site, the offshore foundation comprises an installation interface for a wind turbine,
- a wind turbine tower configured to be installed on the offshore foundation, a nacelle provided on top of the wind turbine tower, and a rotor rotatably mounted to the nacelle, the rotor comprises at least two wind turbine blades mounted to a rotor hub, the wind turbine further comprises a control unit configured to control the operation of the wind turbine, wherein
- at least one measuring unit is configured to measure a wave height, the measuring unit being configured to communicate with the control unit, characterised in that
- the wind turbine is further configured to position the rotor in a parked position with a maximum clearance between the at least two wind turbine blades and a sea level if the measured wave height exceeds a predetermined threshold, wherein the distance between the sea level and the lowermost position of a tip end of the at least two wind turbine blades is equal to or less than 20 metres.

This provides a wind turbine structure that allows the weight of the wind turbine tower and of the offshore foundation to be optimised by operating the wind turbine according to the measured wave height. This configuration eliminates the need for a ballast system to raise and lower the wind turbine relative to the sea level as function of the wind speed. This allows the tower height and thus the moment arm of the wind turbine to be reduced compared to conventional offshore wind turbines. This in turn reduces the bending moment and forces introduced into the offshore foundation which means that a lighter and/or smaller structure are required to counteract these forces, thereby saving costs of the offshore foundation.

According to one embodiment, the offshore foundation is a floating foundation.

The offshore foundation may be any type of offshore foundation suitable for installing the wind turbine at an offshore location. The offshore foundation may be a mono-pole, a gravity foundation, a tripod foundation, a jacket foundation, a tri-pile foundation or a floating foundation. The floating foundation may be any type of floating structure comprising at least one, two, three or more buoyancy chambers.

According to one embodiment, the distance between the sea level and the lowermost position is between 10 metres and 18 metres.

The wind turbine has a reduced tower height compared to conventional offshore wind turbines. The wind turbine is configured so that it has a ratio between the blade length and the tower height of at least 0.5, preferably between 0.5 and 0.9. Conventional offshore wind turbines has a ratio of less than 0.5 since the wind turbine tower is designed to have a tower height of at least two times the length of the wind turbine blades. Furthermore, conventional offshore wind turbines are often designed so that extreme waves of about 18 metres are not able to hit the wind turbine blades. This allows the clearance between the lowermost position of the tip end of the wind turbine blade and the sea level to be reduced. This also reduces the tilting velocity and acceleration of the nacelle as the tower height is reduced, thus saving material and weight of the top end of the wind turbine tower which in turn reduces the costs.

The tower height may be selected so that the wind turbine structure has a clearance between a lowermost position of the tip end of the wind turbine blades during rotation and the sea level which is equal to or less than 20 metres, preferably between 10 metres and 18 metres, e.g. 12 metres or 15 metres.

According to one embodiment, the at least one measuring unit is arranged on the wind turbine structure or positioned relative to the offshore foundation.

The measuring unit is configured to be positioned relative to the offshore foundation or the wind turbine so that it is able to measure the wave height. The measuring unit may comprise a radar, a camera, an electromagnetic transmitter and receiver or other suitable measuring means for wirelessly measuring the wave height. The measuring unit may further comprise any suitable processing means, e.g. a microprocessor or another electronic circuit, for processing the data from the measuring means and determine the wave height or a signal representative of the wave height. Alternatively, the measuring unit may comprise a buoy or another buoyant element configured to be placed at the sea level or at a predetermined depth, such as a wave sensor, a sonar, a gyroscope, one or more accelerometers, a GPS unit or another suitable measuring unit. The measuring unit may instead be configured to be placed at the seabed, such as an upwards looking sonar. Two or more measuring units may be used to determine the wave height. The measuring unit(s) may be connected to the control unit via electrical cables or a wireless connection.

According to one embodiment, the wind turbine structure further comprises at least one monitoring unit configured to monitor a predetermined area relative to the offshore foundation, where the at least one monitoring unit is configured to detect at least one moving object within this area.

The monitoring unit is arranged on the wind turbine or on the offshore foundation and is configured to detect objects within a predetermined distance from the wind turbine structure. The monitoring unit defines a monitoring area around the wind turbine is configured to detect vessels, persons in distress, large block of ice or even helicopters located within this monitoring area. The monitoring unit may comprise a radar, a camera, a transmitter and a receiver, or other suitable monitoring means for detecting objects within the monitoring area. The monitoring unit further comprises any suitable means, e.g. a microprocessor or another electronic circuit, for processing the data and determining if an object is located within the monitoring area. The control unit is configured to communicate with the monitoring unit via a wired or wireless connection. This increases the safety around the wind turbine as the wind turbine is shut down if an object is located too close or is approaching the wind turbine, thus reducing the risk that the object is struck by the wind turbine blades.

Alternatively or additionally, the monitoring unit may comprise an optional GPS receiver and a communication module configured to communicate with one or more external units located on a vessel, a life jacket or a helicopter or one or more external central stations. The communications module may communicate with the external unit or station via very-high frequency (VHF) signals. The external station and/or unit may form part of a vessel monitoring system (VMS), an automatic identification system (AIS), a vessel traffic service (VTS), or another relevant system. This allows the monitoring unit to determine if the vessel, helicopter or person is located with the monitoring area based on at least the received position data. This also allows the monitoring unit or the control unit to send the position data of the wind turbine to any vessel or helicopter located within the monitoring area or even to an external system, such as a traffic monitoring system.

According to one embodiment, the wind turbine is configured to operate in a normal operation mode if no control signal is received from the monitoring unit, wherein said control signal either indicative of the at least one moving object being located within this area or indicative of the at least one moving object is not approaching the wind turbine.

The control unit of the wind turbine is configured to operate the wind turbine in the normal operation mode, as mentioned earlier, when no objects are detected with this safety zone and/or when said object is determined not to move towards the wind turbine. In this normal operation mode, the control unit may be configured to maximise the power output or maintain a nominal power output of the wind turbine. The control unit may be configured to switch between the normal operation mode and the shutdown mode based on one or more suitable control signals from the monitoring unit. Said control signals may indicate whether or not one or more moving objects are located within this safety zone and/or whether one or more of the detected objects are approaching the wind turbine or not.

According to one embodiment, the wind turbine is configured to operate in a normal operation mode if the measured wave height is below the threshold.

The control unit is, in this normal operation mode, configured to pitch the wind turbine blades according to a predetermined power output profile, as mentioned earlier. The pitching may be carried out via a local pitch control system connected to the control unit. This allows the wind turbine to continue to produce power if no high waves are detected. The wind turbine is switched to the shutdown mode if the measured wave height exceeds the threshold. In this configuration, the downtime may be greater than that of a conventional offshore wind turbine due to the maximum allowable wave height.

According to one embodiment, the wind turbine comprises three wind turbine blades.

The wind turbine in this configuration comprises at least two or three wind turbine blades. The rotor is preferably parked in a predetermined position with a maximum clearance between the tip end of a downwards facing wind turbine blade and the sea level. For a two-bladed wind turbine, this is achieved by rotating the wind turbine blades into a horizontal position. For a three-bladed wind turbine, this is achieved by rotating one of the wind turbine blades into a vertical direction so that it extends away from the wind turbine tower. This reduces the risk of the wind turbine blades hitting vessel or another object to a minimum. This also allows the rotor to passively or actively align itself with the wind direction and thereby track the wind direction as it shifts.

The rotor is optionally parked in a predetermined position with a minimum clearance between the tip end of a downwards facing wind turbine blade and the sea level. For a two-bladed wind turbine, this is achieved by rotating the wind turbine blades into a vertical position. For a three-bladed wind turbine, this is achieved by rotating one of the wind turbine blades into a vertical direction so that it extends downwards along the wind turbine tower. This reduces the total surface area which is influenced by the incoming wind, this position is suitable for extreme wind conditions or service works.

### Description of the Drawing

The invention is described by example only and with reference to the drawings, wherein:
- Fig. 1: shows a conventional wind turbine installed on an offshore foundation;
- Fig. 2: shows an exemplary embodiment of the wind turbine structure according to the invention;
- Fig. 3: shows an exemplary embodiment of a monitoring unit for detecting objects with a monitoring area;
- Fig. 4: shows a first exemplary embodiment of a measuring unit for measuring the wave height; and
- Fig. 5: shows a second exemplary embodiment of the measuring unit for measuring the wave height.

In the following text, the figures will be described one by one and the different parts and positions seen in the figures will be numbered with the same numbers in the different figures. Not all parts and positions indicated in a specific figure will necessarily be discussed together with that figure.

### Reference list

- 1: Wind turbine
- 2: Offshore foundation
- 3: Wind turbine blades
- 4: Inner blade section
- 5: Outer blade section
- 6: Pitch junction
- 7: Rotor hub
- 8: Nacelle
- 9: Wind turbine tower
- 10: Sea level
- 11: Wind turbine
- 12: Offshore foundation
- 13: Wind turbine tower
- 14: Seabed
- 15: Anchoring lines, chains
- 16: Monitoring unit
- 17: Object, vessel
- 18: Measuring unit, buoy
- 19: Buoyant element
- 20: Anchoring lines
- 21: Measuring unit, sonar

### Detailed Description of the Invention

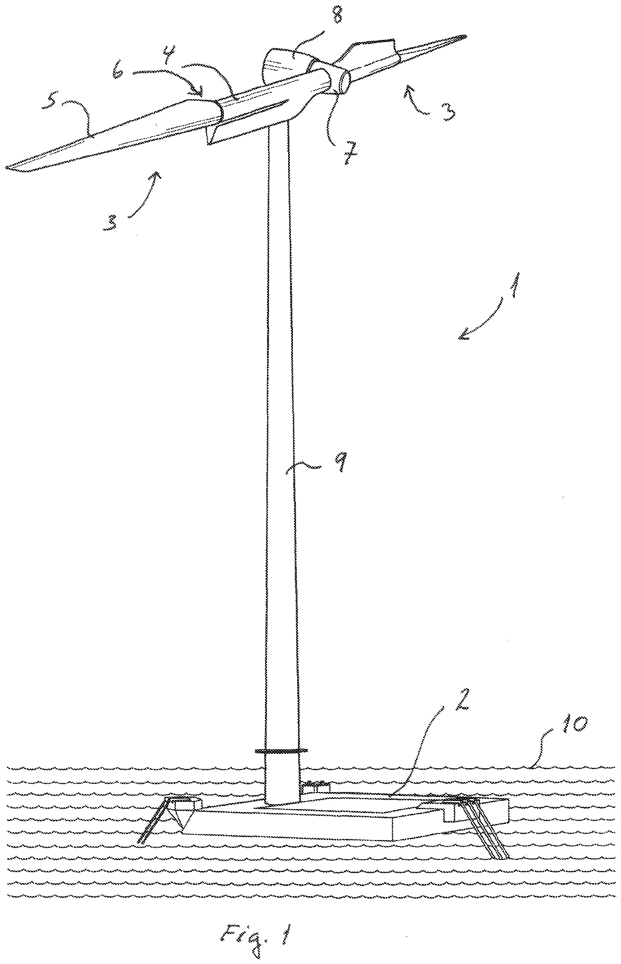

Fig. 1 shows a conventional wind turbine 1 arranged on an offshore foundation 2. The wind turbine 1 is here shown as a two-blade wind turbine, but it may comprise three wind turbine blades. The wind turbine blades 3 are here shown as partial-pitch blades, but the wind turbine blades 3 may be full-span blades. The wind turbine blade 3 comprises an inner blade section 4 connected to an outer blade section 5via a pitch junction 6. The wind turbine blades 3 are mounted to a rotor hub 7 which is rotatably mounted to a nacelle 8. The nacelle 8 is arranged on top of a wind turbine tower 9 having a predetermined tower height.

In this embodiment, the wind turbine 1 has a ratio between a blade length of the wind turbine blades 3 and the tower height of the wind turbine tower 9 of less than 0.5. The nacelle 8 and rotor hub 7 are placed at a predetermined hub height relative to a sea level 10 so that a sufficient clearance between the lowermost position of the tip end of the wind turbine blades 3 and the sea level 10 is achieved.

The offshore foundation 2 is here shown as a floating foundation, but may be a different type of offshore foundation, such as a mono-pole, a tripod, a jacket foundation, or a gravity foundation.

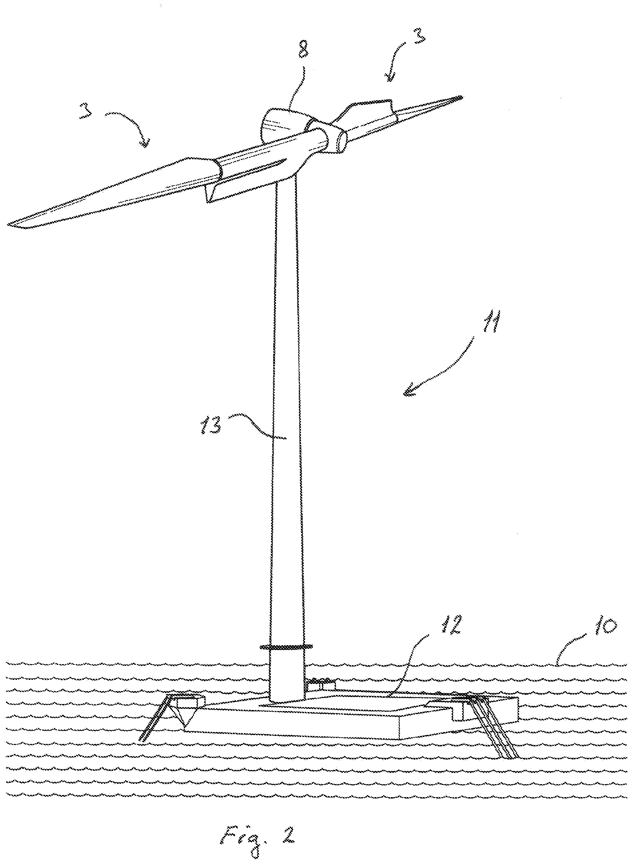

Fig. 2 shows an exemplary embodiment of a wind turbine 11 and an offshore foundation 12 according to the invention. In this embodiment, the wind turbine 11 has a reduced tower height compared to the wind turbine 1.

The wind turbine 11 comprises a wind turbine tower 13 which has a tower height of less than two times than the blade length of the wind turbine blades 3, thus the ratio is greater than 0.5, preferably between 0.5 and 0.9. The wind turbine blade 3 in this embodiment has the same blade length as the wind turbine blades 3 shown in fig. 1. This reduces the moment arm and thus the bending moment of the wind turbine 11 which in turn reduces the tilting velocity and acceleration of the nacelle 8. This also saves material and costs of the wind turbine tower 13. The reduced tower height also means that the wind turbine tower 13 has a higher resonance frequency, thus making it less prone to resonate.

The offshore foundation 12 is here shown as a floating foundation, optionally any type of offshore foundation may be used as mentioned above. The forces and bending moment introduced into the offshore foundation 12 are smaller than those introduced into the offshore foundation 2 due to the reduced tower height and thus the reduced hub height. This means that the offshore foundation 12 in this embodiment has a size and/or weight that is/are smaller than those of the offshore foundation 2, since a smaller mass is needed to provide a stable platform. This in turn saves material and costs of the offshore foundation 12.

The clearance between the tip end of the wind turbine blades 3 and the sea level 10 is in this embodiment equal to or less than 25 metres, preferably between 5 and 20 metres.

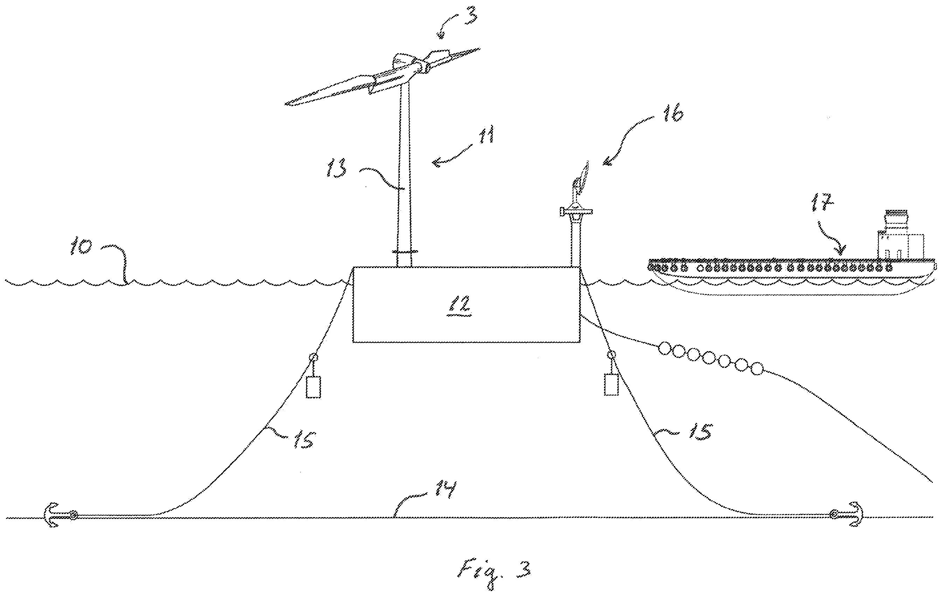

Fig. 3 shows the wind turbine 11 arranged on the offshore foundation 12 where the offshore foundation 12 is secured to a seabed 14 by means of one or more anchoring lines 15, e.g. anchor chains. One or more monitoring units 16 are arranged on the offshore foundation 12. The monitoring unit 16 is configured to detect any moving objects 17 within a monitoring area, such as vessels. The monitoring unit 16 comprises a radar configured to transmit an electromagnetic signal, e.g. radio waves, and receive the reflected signal from an object 17 located in the monitoring area. The monitoring unit 16 further comprises an electronic circuit, e.g. a microprocessor, configured to analyse the received signal and determine if the object 17 is located within the monitoring area or not, optionally also the direction and/or speed of the object 17. This defines a safety zone around the wind turbine structure 11, 12.

The monitoring unit 16 monitors the monitoring area and sends a signal or command to a control unit located in the wind turbine 11 indicating that an object 17 is located inside the monitoring area. The control unit then switches the wind turbine 11 to a shutdown mode in which the rotor is parked in a predetermined position. In the parked position, the rotor and thus the wind turbine blades 3 are rotated to a horizontal position as shown in fig. 3 and optionally located in this position using a rotor locking system. This reduces the risk that the wind turbine blades 3 accidently hit the object 17. When the monitoring unit 16 determines that no objects 17 are located within the monitoring area, a second signal or command is send to the control unit. The control unit then switches the wind turbine 11 and the rotor into a normal operation mode or normal start-up mode depending on the measured wind speed.

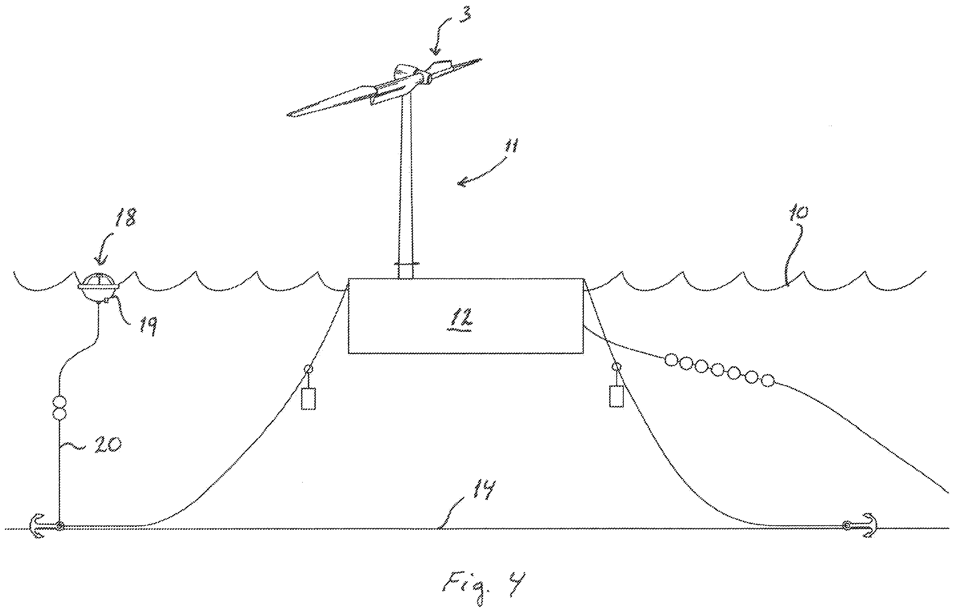

Fig. 4 shows a first exemplary embodiment of a measuring unit 18 arranged relative to the foundation 12. The measuring unit 18 is configured to measure the wave height relative to a nominal sea level, e.g. using a wave sensor, a GPS receiver or one or more accelerometers. The measuring unit 18 comprises a buoyant element 19, e.g. a buoy shaped element, configured to be placed at the sea level 10 so that it follows the wave movements. The buoyant element 19 is secured to the seabed 14 via one or more anchoring lines 20. Here only one measuring unit 18 is shown, but two or more measuring units 18 may be used.

The measuring unit 18 measures the wave height continuously or periodically and transmits the measured signals to the control unit in the wind turbine 11 via a wired or wireless connection. The control unit then determines the wave height and compares it to a predetermined threshold. Alternatively, the measuring unit 18 comprises an electronic circuit, e.g. a microprocessor, which determines the wave height and sends a signal indicating the wave height to the control unit. The threshold value may be 18 metres or less, preferably between 5 and 15 metres. If the measured wave height exceeds the threshold, then the control unit switches the wind turbine into the shutdown mode and the rotor is positioned in the parked position. When the measured wave height drops below the threshold, the control unit switches the wind turbine 11 and the rotor into the normal operation mode or normal start-up mode depending on the measured wind speed. This reduces the risk that the waves hit the wind turbine blades 3 during rotation.

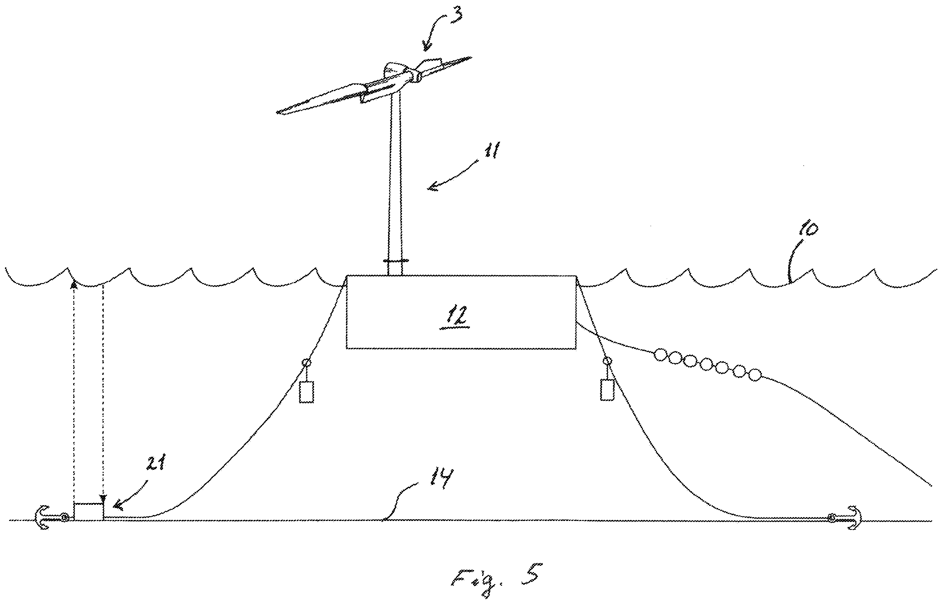

Fig. 5 shows a second exemplary embodiment of the measuring unit. The measuring unit 21 is in this embodiment arranged at the seabed 14 and connected to the control unit in the wind turbine 11 via a wired or wireless connection. The measuring unit 21 is configured to measure the wave height relative to the nominal sea level 10, e.g. using a sonar in the form of an upwards looking sonar.

The measuring unit 21 transmits an acoustic signal, e.g. acoustic pulses, towards the sea level 10 and receives a reflected signal from the sea level 10 as indicated by dotted lines in fig. 5. The measuring unit 21, or the control unit, then determines the wave height. The measured wave height is then compared to the threshold as described above.

The present invention is not limited to the illustrated embodiment or the described embodiments herein, and may be modified or adapted without departing from the scope of the present invention as described in the patent claims below.

## Claims

1. A method for optimising the weight of a wind turbine structure, the wind turbine structure comprises a wind turbine (1) provided on an offshore foundation (2), the wind turbine (1) comprises a rotor with at least two wind turbine blades (3) and a rotor hub, the wind turbine (1) further comprises a wind turbine tower (9), wherein the method comprises the steps of:
- providing the wind turbine (1) with a distance between a sea level (10) and a lowermost position of a tip end of the at least two wind turbine blades (3) which is equal to or less than 20 metres,
- measuring at least a wave height,
- operating the wind turbine according to the measured wave height,
- positioning the rotor in a parked position with a maximum clearance between the at least two wind turbine blades (3) and the sea level (10) if at least the measured wave height exceeds a predetermined threshold.

2. A method according to claim 1, **characterised in that** the method further comprises determining a ratio between a blade length of one of the at least two wind turbine blades (3) and a tower height of the wind turbine tower (9), wherein the ratio of the wind turbine (1) is greater than 0.5.

3. A method according to claim 1 or 2, **characterised in that** the wind turbine (1) is operated in a normal operation mode if the measured wave height is equal to or below the threshold.

4. A method according to any one of claims 1 to 3, **characterised in that** the predetermined threshold is 18 metres or less, preferably between 8 metres and 18 metres.

5. A method according to any one of claims 1 to 4, **characterised in that** the wind turbine (1) is operated in a shutdown mode if the measured wave height is above the threshold.

6. A method according to claim 5, **characterised in that** the method further comprises monitoring a predetermined area relative to the offshore foundation (12), wherein the wind turbine (1) is further operated in the shutdown mode if at least one moving object is detected within this area.

7. A method according to any one of claims 1 to 6, **characterised in that** the step of positioning further comprises yawing the nacelle into a parked position in which the rotor is arranged on an opposite side of an outer ladder which provides access to the wind turbine (1).

8. A wind turbine structure comprising:
- an offshore foundation (2) configured to be installed at an installation site, the offshore foundation (2) comprises an installation interface for a wind turbine (1),
- the wind turbine (1) comprises a wind turbine tower (9) configured to be installed on the offshore foundation (2), a nacelle provided on top of the wind turbine tower (9), and a rotor rotatably mounted to the nacelle, the rotor comprises at least two wind turbine blades (3) mounted to a rotor hub (7), the wind turbine (1) further comprises a control unit configured to control the operation of the wind turbine (1), wherein
- at least one measuring unit is configured to measure a wave height, the measuring unit being configured to communicate with the control unit, **characterised in that**
- the wind turbine (1) is further configured to position the rotor in a parked position with a maximum clearance between the at least two wind turbine blades (3) and a sea level (10) if the measured wave height exceeds a predetermined threshold, wherein the distance between the sea level and the lowermost position of a tip end of the at least two wind turbine blades (3) is equal to or less than 20 metres.

9. A wind turbine structure according to claim 8, **characterised in that** the offshore foundation (2) is a floating foundation.

10. A wind turbine structure according claim 8 or 9, **characterised in that** the distance between the sea level (10) and the lowermost position is between 10 metres and 18 metres.

11. A wind turbine structure according to claim 8 or 10, **characterised in that** the at least one measuring unit is arranged on the wind turbine structure or positioned relative to the offshore foundation (2).

12. A wind turbine structure according to any one of claims 8 to 11, **characterised in that** the wind turbine structure further comprises at least one monitoring unit (16) configured to monitor a predetermined area relative to the offshore foundation (2), wherein the at least one monitoring unit (16) is configured to detect at least one moving object within this area.

13. A wind turbine structure according to claim 12, **characterised in that** the wind turbine is configured to operate in a normal operation mode if no control signal is received from the at least one monitoring unit (16), wherein said control signal either indicative of the at least one moving object being located within this area or indicative of the at least one moving object is not approaching the wind turbine.

14. A wind turbine structure according to any one of claims 8 to 11, **characterised in that** the wind turbine (1) is configured to operate in a normal operation mode if the measured wave height is below the threshold.

15. A wind turbine structure according to any one of claims 8 to 14, **characterised in that** the wind turbine (1) comprises three wind turbine blades (3).

## Patentansprüche

1. Verfahren zum Optimieren eines Gewichts einer Windturbinenstruktur, wobei die Windturbinenstruktur eine auf einem Offshore-Fundament (2) bereitgestellte Windturbine (1) umfasst, wobei die Windturbine (1) einen Rotor mit mindestens zwei Windturbinenschaufeln (3) und einer Rotornabe umfasst, wobei die Windturbine (1) ferner einen Windturbinenturm (9) umfasst, wobei das Verfahren die folgenden Schritte umfasst:
Bereitstellen der Windturbine (1) in einem Abstand zwischen einem Meeresspiegel (10) und einer untersten Position eines Spitzenendes der mindestens zwei Windturbinenschaufeln (3), der gleich oder kleiner als 20 Meter ist,
Messen mindestens einer Wellenhöhe,
Betreiben der Windturbine gemäß der gemessenen Wellenhöhe, Positionieren des Rotors in einer Parkposition mit einem maximalen Freiraum zwischen den mindestens zwei Windturbinenschaufeln (3) und dem Meeresspiegel (10), wenn mindestens die gemessene Wellenhöhe einen vorbestimmten Schwellenwert überschreitet.

2. Verfahren nach Anspruch 1, **dadurch gekennzeichnet, dass** das Verfahren ferner Bestimmen eines Verhältnisses zwischen einer Schaufellänge einer der mindestens zwei Windturbinenschaufeln (3) und einer Turmhöhe des Windturbinenturms (9) umfasst, wobei das Verhältnis der Windturbine (1) größer als 0,5 ist.

3. Verfahren nach Anspruch 1 oder 2, **dadurch gekennzeichnet, dass** die Windturbine (1) in einem Normalbetriebsmodus betrieben wird, wenn die gemessene Wellenhöhe gleich oder kleiner als der Schwellwert ist.

4. Verfahren nach einem der Ansprüche 1 bis 3, **dadurch gekennzeichnet, dass** der vorbestimmte Schwellenwert 18 Meter oder weniger, vorzugsweise zwischen 8 Meter und 18 Meter, beträgt.

5. Verfahren nach einem der Ansprüche 1 bis 4, **dadurch gekennzeichnet, dass** die Windturbine (1) in einem Abschaltmodus betrieben wird, wenn die gemessene Wellenhöhe über dem Schwellwert liegt.

6. Verfahren nach Anspruch 5, **dadurch gekennzeichnet, dass** das Verfahren ferner Überwachen eines vorbestimmten Bereichs in Bezug auf das Offshore-Fundament (12) umfasst, wobei die Windturbine (1) ferner im Abschaltmodus betrieben wird, wenn mindestens ein sich bewegendes Objekt innerhalb dieses Bereichs erfasst wird.

7. Verfahren nach einem der Ansprüche 1 bis 6, **dadurch gekennzeichnet, dass** der Schritt des Positionierens ferner Gieren der Gondel in eine Parkposition umfasst, in der der Rotor auf einer gegenüberliegenden Seite einer Außenleiter angeordnet ist, die Zugang zur Windturbine (1) bereitstellt.

8. Windturbinenstruktur, die Folgendes umfasst:
ein Offshore-Fundament (2), das dazu konfiguriert ist, an einem Installationsort installiert zu werden, wobei das Offshore-Fundament (2) eine Installationsgrenzfläche für eine Windturbine (1) umfasst,
wobei die Windturbine (1) einen Windturbinenturm (9), der zur Installation auf dem Offshore-Fundament (2) konfiguriert ist, eine Gondel, die oben auf dem Windturbinenturm (9) bereitgestellt ist, und einen Rotor, der drehbar an der Gondel montiert ist, umfasst, wobei der Rotor mindestens zwei Windturbinenschaufeln (3) umfasst, die an einer Rotornabe (7) montiert sind, wobei die Windturbine (1) ferner eine Steuereinheit umfasst, die dazu konfiguriert ist, den Betrieb der Windturbine (1) zu steuern, wobei
mindestens eine Messeinheit dazu konfiguriert ist, eine Wellenhöhe zu messen, wobei die Messeinheit dazu konfiguriert ist, mit der Steuereinheit zu kommunizieren, **dadurch gekennzeichnet, dass**
die Windturbine (1) ferner dazu konfiguriert ist, den Rotor in einer Parkposition mit einem maximalen Freiraum zwischen den mindestens zwei Windturbinenschaufeln (3) und einem Meeresspiegel (10) zu positionieren, wenn die gemessene Wellenhöhe einen vorbestimmten Schwellenwert überschreitet, wobei der Abstand zwischen dem Meeresspiegel und der untersten Position eines Spitzenendes der mindestens zwei Windturbinenschaufeln (3) gleich oder kleiner als 20 Meter ist.

9. Windturbinenstruktur nach Anspruch 8, **dadurch gekennzeichnet, dass** das Offshore-Fundament (2) ein schwimmendes Fundament ist.

10. Windturbinenstruktur nach Anspruch 8 oder 9, **dadurch gekennzeichnet, dass** der Abstand zwischen dem Meeresspiegel (10) und der untersten Position zwischen 10 Meter und 18 Meter beträgt.

11. Windturbine nach Anspruch 8 oder 10, **dadurch gekennzeichnet, dass** die mindestens eine Messeinheit an der Windturbine angeordnet oder in Bezug auf das Offshore-Fundament (2) positioniert ist.

12. Windturbinenstruktur nach einem der Ansprüche 8 bis 11, **dadurch gekennzeichnet, dass** die Windturbinenstruktur ferner mindestens eine Überwachungseinheit (16) umfasst, die dazu konfiguriert ist, einen vorbestimmten Bereich in Bezug auf das Offshore-Fundament (2) zu überwachen, wobei die mindestens eine Überwachungseinheit (16) dazu konfiguriert ist, mindestens ein sich bewegendes Objekt innerhalb dieses Bereichs zu erfassen.

13. Windturbinenstruktur nach Anspruch 12, **dadurch gekennzeichnet, dass** die Windturbine dazu konfiguriert ist, in einem Normalbetriebsmodus zu arbeiten, wenn kein Steuersignal von der mindestens einen Überwachungseinheit (16) empfangen wird, wobei das Steuersignal entweder angibt, das sich das mindestens eine sich bewegende Objekt innerhalb dieses Bereichs befindet, oder angibt, dass sich das mindestens eine sich bewegende Objekt der Windturbine nicht nähert.

14. Windturbinenstruktur nach einem der Ansprüche 8 bis 11, **dadurch gekennzeichnet, dass** die Windturbine (1) dazu konfiguriert ist, in einem Normalbetriebsmodus zu arbeiten, wenn die gemessene Wellenhöhe unter dem Schwellenwert liegt.

15. Windturbinenstruktur nach einem der Ansprüche 8 bis 14, **dadurch gekennzeichnet, dass** die Windturbine (1) drei Windturbinenschaufeln (3) umfasst.

## Revendications

1. Procédé pour l'optimisation du poids d'une structure d'éolienne, la structure d'éolienne comprend une éolienne (1) ménagée sur une fondation en mer (2), l'éolienne (1) comprend un rotor ayant au moins deux pales d'éolienne (3) et un moyeu de rotor, l'éolienne (1) comprend en outre une tour d'éolienne (9), dans lequel le procédé comprend les étapes de :
le placement de l'éolienne (1) avec une distance, entre un niveau de la mer (10) et une position la plus basse d'une extrémité de bout des au moins deux pales d'éolienne (3), qui est égale ou inférieure à 20 mètres,
la mesure d'au moins une hauteur de la houle,
le fonctionnement de l'éolienne selon la hauteur de la houle mesurée,
le positionnement du rotor dans une position rangée avec une garde maximale entre les au moins deux pales d'éolienne (3) et le niveau de la mer (10) si au moins la hauteur de la houle mesurée dépasse un seuil prédéterminé.

2. Procédé selon la revendication 1, **caractérisé en ce que** le procédé comprend en outre la détermination d'un rapport entre une longueur de pale de l'une des au moins deux pales d'éolienne (3) et une hauteur de tour de la tour d'éolienne (9), dans lequel le rapport de l'éolienne (1) est supérieur à 0,5.

3. Procédé selon la revendication 1 ou 2, **caractérisé en ce que** l'éolienne (1) fonctionne dans un mode de fonctionnement normal si la hauteur de la houle mesurée est égale au seuil ou au-dessous de celui-ci.

4. Procédé selon l'une quelconque des revendications 1 à 3, **caractérisé en ce que** le seuil prédéterminé est de 18 mètres ou moins, de préférence entre 8 mètres et 18 mètres.

5. Procédé selon l'une quelconque des revendications 1 à 4, **caractérisé en ce que** l'éolienne (1) est en fonctionnement dans un mode d'arrêt si la hauteur de la houle mesurée est au-dessus du seuil.

6. Procédé selon la revendication 5, **caractérisé en ce que** le procédé comprend en outre la surveillance d'une zone prédéterminée par rapport à la fondation en mer (12), dans lequel l'éolienne (1) est en outre en fonctionnement dans le mode d'arrêt si au moins un objet mobile est détecté au sein de cette zone.

7. Procédé selon l'une quelconque des revendications 1 à 6, **caractérisé en ce que** l'étape de positionnement comprend en outre le déplacement en lacet de la nacelle jusqu'à une position rangée dans laquelle le rotor est agencé sur un côté opposé d'une échelle externe qui fournit un accès à l'éolienne (1).

8. Structure d'éolienne comprenant :
une fondation en mer (2) configurée pour être installée au niveau d'un site d'installation, la fondation en mer (2) comprend une interface d'installation pour une éolienne (1),
l'éolienne (1) comprend une tour d'éolienne (9) configurée pour être installée sur la fondation en mer (2), une nacelle ménagée au sommet de la tour d'éolienne (9), et un rotor monté de manière rotative sur la nacelle, le rotor comprend au moins deux pales d'éolienne (3) montées sur un moyeu de rotor (7), l'éolienne (1) comprend en outre une unité de commande configurée pour commander le fonctionnement de l'éolienne (1), dans laquelle au moins une unité de mesure est configurée pour mesurer une hauteur de la houle, l'unité de mesure étant configurée pour communiquer avec l'unité de commande, **caractérisée en ce que** l'éolienne (1) est en outre configurée pour positionner le rotor dans une position rangée avec une garde maximale entre les au moins deux pales d'éolienne (3) et un niveau de la mer (10) si la hauteur de la houle mesurée dépasse un seuil prédéterminé, dans laquelle la distance entre le niveau de la mer et la position la plus basse d'une extrémité de bout des au moins deux pales d'éolienne (3) est égale ou inférieure à 20 mètres.

9. Structure d'éolienne selon la revendication 8, **caractérisée en ce que** la fondation en mer (2) est une fondation flottante.

10. Structure d'éolienne selon la revendication 8 ou 9, **caractérisée en ce que** la distance entre le niveau de la mer (10) et la position la plus basse est entre 10 mètres et 18 mètres.

11. Structure d'éolienne selon la revendication 8 ou 10, **caractérisée en ce que** l'au moins une unité de mesure est agencée sur la structure d'éolienne ou positionnée par rapport à la fondation en mer (2).

12. Structure d'éolienne selon l'une quelconque des revendications 8 à 11, **caractérisée en ce que** la structure d'éolienne comprend en outre au moins une unité de surveillance (16) configurée pour surveiller une zone prédéterminée par rapport à la fondation en mer (2), dans laquelle l'au moins une unité de surveillance (16) est configurée pour détecter au moins un objet mobile au sein de cette zone.

13. Structure d'éolienne selon la revendication 12, **caractérisée en ce que** l'éolienne est configurée pour fonctionner dans un mode de fonctionnement normal si aucun signal de commande n'est reçu en provenance de l'au moins une unité de surveillance (16), dans laquelle ledit signal de commande est soit indicatif du fait que l'au au moins un objet mobile est situé au sein de cette zone soit indicatif du fait que l'au moins un objet mobile ne s'approche pas de l'éolienne.

14. Structure d'éolienne selon l'une quelconque des revendications 8 à 11, **caractérisée en ce que** l'éolienne (1) est configurée pour fonctionner dans un mode de fonctionnement normal si la hauteur de la houle mesurée est au-dessous du seuil.

15. Structure d'éolienne selon l'une quelconque des revendications 8 à 14, **caractérisée en ce que** l'éolienne (1) comprend trois pales d'éolienne (3).
